# EUROPÄISCHE PATENTSCHRIFT

(11) **EP 1 585 662 B1**
(45) Veröffentlichungstag und Bekanntmachung des Hinweises auf die Patenterteilung: **31.01.2007**
(21) Anmeldenummer: 03775401.7
(22) Anmeldetag: 01.12.2003
(51) Int. Cl.: B62D 5/04, B62D 6/00

(54) **VERFAHREN ZUR SYNCHRONISATION VON LENKHANDHABE UND GELENKTEN FAHRZEUGRÄDERN**
METHOD FOR SYNCHRONISING A STEERING WHEEL AND STEERED WHEELS OF A MOTOR VEHICLE
PROCEDE POUR SYNCHRONISER LE VOLANT DE BRAQUAGE ET LES ROUES DIRECTRICES D'UN VEHICULE

(30) Priorität: 22.01.2003 DE 10302559
(43) Veröffentlichungstag der Anmeldung: 19.10.2005
(73) Patentinhaber: DaimlerChrysler AG, 70567 Stuttgart (DE)
(72) Erfinder: MOSER, Martin, 70736 Fellbach (DE); SCHNECKENBURGER, Reinhold, 71277 Rutesheim (DE)
(86) Internationale Anmeldenummer: PCT/EP2003/013482
(87) Internationale Veröffentlichungsnummer: WO 2004/065195

(56) Entgegenhaltungen:
- EP-A- 0 353 995
- WO-A-02/062646

## Beschreibung

Die Erfindung bezieht sich auf ein Verfahren zur Synchronisation von Lenkhandhabe und gelenkten Fahrzeugrädern, insbesondere bei einem Kraftfahrzeug, gemäß dem Oberbegriff des Anspruches 1. Ein solches Verfahren wird in WO-A-02/062 646 offenbart. Außerdem bezieht sich die Erfindung auf eine für das Verfahren besonders geeignete Vorrichtung.

Betroffen sind Lenkungen mit veränderbarer Zuordnungsfunktion zwischen der Handhabenstellung des Lenkhandrades und dem an den gelenkten Fahrzeugrädern eingestellten Lenkwinkel.

Beispielsweise zeigt die DE 196 01 826 A1 ein Lenksystem, bei dem ein die gelenkten Fahrzeugräder steuerndes Lenkgetriebeteil mechanisch über ein Überlagerungsgetriebe einerseits mit einem Lenkhandrad und andererseits mit einem automatisch gesteuerten Elektromotor verbunden ist. Dementsprechend wird eine Lenkwinkeländerung der gelenkten Räder jeweils durch die Überlagerung der Handhabenstellungsänderung des Lenkhandrades und der Stellungsänderung des Elektromotors bestimmt. Mit einer dem Elektromotor zugeordneten Steuervorrichtung kann dann eine prinzipiell beliebige Zuordnungsfunktion von Handhabenstellung und Lenkwinkel eingestellt werden.

Ähnliche Verhältnisse liegen bei Lenksystemen vor, die nach dem Konzept "Steer-by-wire" arbeiten. Ein solches Lenksystem wird beispielhaft in der DE 100 21 903 A1 beschrieben. Dabei betätigt ein Lenkhandrad einen Lenkwinkelsollwertgeber. Den gelenkten Fahrzeugrädern ist ein Lenkwinkelistwertgeber sowie ein zur Lenkverstellung vorgesehener, z.B. elektrischer Stellmotor zugeordnet, der von einer Regelvorrichtung in Abhängigkeit von einem Soll-Istwert-Vergleich des Lenkwinkels gesteuert wird. Im Ergebnis folgt also der Lenkwinkel der gelenkten Fahrzeugräder der Lenkwinkelvorgabe des Lenkhandrades.

Für den Fall einer Störung des Lenksystems, insbesondere für den Fall einer Unterbrechung oder Abschaltung der Energiezufuhr, ist gemäß der DE 100 21 903 A1 zwischen dem Lenkhandrad und den gelenkten Fahrzeugrädern eine mittels Kupplung auftrennbare Lenksäule vorgesehen, wobei die Kupplung bei normalem Lenkbetrieb offen ist, so dass die Zuordnungsfunktion zwischen dem an den gelenkten Fahrzeugrädern eingestellten Lenkwinkel und dem Drehwinkel des Lenkhandrades bei normalem Betrieb allein durch die Regelvorrichtung bestimmt wird.

Das Lenkhandrad kann bei derartigen Lenksystemen auch bei Nichtbetrieb der Steuer- bzw. Regelvorrichtung, bei abgeschaltetem Fahrzeugmotor und/oder bei Ausfall der fahrzeugseitigen elektrischen Energieversorgung betätigt werden. Jedoch ist dabei die Zuordnungsfunktion von Lenkradwinkel und Lenkwinkel der gelenkten Fahrzeugräder nicht entsprechend der in der Steuer- bzw. Regelvorrichtung abgelegten Lenkkennlinie gegeben, sondern es besteht eine mechanische Kopplung von Lenkhandhabe und gelenkten Fahrzeugrädern mit einer mechanisch vorgegeben Zuordnungsfunktion. Im Falle der DE 196 01 826 A1 ist dies die Zuordnungsfunktion der bei stillstehendem Elektromotor vorliegenden Zwangskopplung zwischen Lenkhandrad und gelenkten Fahrzeugrädern. Im Falle der DE 190 21 903 A1 ist dies die Zuordnungsfunktion der bei geschlossener Kupplung bewirkten Zwangskopplung von Lenkhandrad und gelenkten Fahrzeugrädern.

Falls die vorgenannte Zwangskopplung zu einem Zeitpunkt wirksam wird, zu dem die gelenkten Fahrzeugrädern einen von der Geradeausstellung abweichenden Lenkwinkel und dementsprechend die Lenkhandhabe eine von der Normallage abweichende Stellung einnehmen, ist die eingangs genannte Korrelation der gelenkten Fahrzeugräder sowie der Lenkhandhabe in der Regel nicht mehr gegeben, da die Zuordnungsfunktion zwischen Handhabenstellung und Lenkwinkel bei aktiver Zwangskopplung eine andere ist, als beim Normalbetrieb des Lenksystems. Dies kann dazu führen, dass bei aufrechterhaltender Zwangskopplung von Lenkhandhabe und gelenkten Fahrzeugrädern die Normallage der Lenkhandhabe nicht mit der Geradeausstellung der gelenkten Fahrzeugräder zusammentrifft.

Auch wenn die Handhabenstellung bei deaktivierter Steuervorrichtung verändert wird und nachfolgend erneut ein normaler Fahrbetrieb mit aktivierter Steuervorrichtung aufgenommen wird, ist die Korrelation zwischen der Handhabenstellung und dem Lenkwinkel aufgehoben. Dies liegt an der im Normalbetrieb veränderten Zuordnungsfunktion zwischen Handhabenstellung und Lenkwinkel im Vergleich zu der durch die Lenkmechanik gegebenen Zuordnungsfunktion bei deaktivierter Steuervorrichtung.

Aufgabe der Erfindung ist es, bei einer Lenkung der eingangs angegebenen Art eine automatische Synchronisierung von der Handhabenstellung der Lenkhandhabe und dem an den gelenkten Fahrzeugrädern eingestellten Lenkwinkel zu ermöglichen.

Diese Aufgabe wird erfindungsgemäß durch die kennzeichnenden Merkmale der Patentansprüche 1 bzw. 12 gelöst.

Die Erfindung beruht auf dem allgemeinen Gedanken, eine gegebenenfalls notwendige oder wünschenswerte Synchronisierung von Lenkhandhabe und gelenkten Fahrzeugrädern nach dem Aktivieren der Steuervorrichtung vorzunehmen. Dies kann entweder das Aktivieren nach einem Ausfall oder das Aktivieren durch Wiedereinschalten der elektrischen Energieversorgung durch den Fahrer z.B. mittels der Zündung sein. In diesem Aktivierten Zustand kann die Steuervorrichtung eine Stellungsabweichung erkennen und gegebenenfalls eine Relativverstellung vornehmen. Diese Relativverstellung führt dazu, dass die Handhabenstellung und der Lenkwinkel unter Berücksichtigung der momentan gültigen Zuordnungsfunktion miteinander korrespondieren.

Vorteilhafte Weiterbildungen ergeben sich aus den abhängigen Patentansprüchen.

Es ist vorteilhaft, wenn die Relativverstellung nur erfolgt, wenn nach dem oder beim Aktivieren der Steuervorrichtung ein Abfragekriterium erfüllt ist. Das Abfragekriterium kann beispielsweise eine Fahrzustandsgröße des Fahrzeugs oder ein eine Bedienaktivität des Fahrers beschreibende Größe sein. Zwar ist es grundsätzlich auch möglich, diese Relativverstellung nach Start des Fahrzeuges bei stillstehendem Fahrzeug vorzunehmen. Jedoch könnte ein Fahrer, der das Lenksystem noch nicht bzw. in derartigen Situationen noch nicht kennt, überrascht werden. Es könnte dann das Gefühl beim Fahrer entstehen, dass die Lenkung ihm nicht folgt. Darüber hinaus können sich bei unvorsichtigen Wartungs- oder Reparaturarbeiten ergebende Gefahren verringert werden. Beispielsweise könnte eine Person in den Bewegungsbereich der gelenkten Fahrzeugräder hineingreifen oder mit dem Kopf hineinschauen und durch die Relativverstellung eingeklemmt werden, wenn gleichzeitig eine weitere Person die Zündung einschaltet. Da die Relativverstellung erst erfolgt, wenn das weitere Abfragekriterium erfüllt ist, wird diese Gefahr ausgeschlossen.

Dabei kann vorgesehen sein, die Relativverstellung insbesondere bei einer Fahrzeuglängsgeschwindigkeit, die geringer ist als ein vorgebbarer Geschwindigkeitsschwellenwert, nur dann auszuführen, während die Lenkhandhabe (8) vom Fahrer manuell bewegt wird. Durch diese Maßnahme wird erreicht, dass nur bei Lenkaktivitäten des Fahrers die Synchronisierung durch Relativverstellung erfolgt, insbesondere wenn kleine Fahrzeuglängsgeschwindigkeiten vorliegen (z.B. unter 5 km/h) oder das Fahrzeug stillsteht. Für den Fahrer sind Relativverstellungen sehr gut beherrschbar, wenn er selbst Lenkaktivitäten ausübt. Er muss dabei immer leicht korrigieren, was beim Lenken aber kaum wahrgenommen wird, so dass er immer das Gefühl hat, dass die Lenkung des Fahrzeugs auf seine Lenkaktivität reagiert und ihm folgt. Da unmittelbar nach dem Start eines Fahrzeuges oftmals große Lenkwinkeländerungen der gelenkten Fahrzeugräder und dementsprechend große Auslenkbewegungen der Lenkhandhabe notwendig sind, um das Fahrzeug aus einem Parkplatz auf die Fahrbahn zu manövrieren, kann die Synchronisierung für den Fahrer praktisch unbemerkt und bei geringer Fahrgeschwindigkeit vollständig durchgeführt werden.

Es ist auch zweckmäßig, wenn die Relativverstellung insbesondere bei einer Fahrzeuglängsgeschwindigkeit, die größer ist als ein vorgebbarer Geschwindigkeitsschwellenwert, schrittweise zyklisch erfolgt und pro Verstellzyklus ein Verstellschritt durchgeführt wird, bis die Stellungsabweichung in etwa Null beträgt. Durch das zyklische Durchführen von Verstellschritten besteht die Möglichkeit, die Relativverstellung angepasst an den Fahrzustand des Fahrzeugs und die Bedienaktivität des Fahrers durchzuführen.

Dabei kann die Verringerung der Stellungsabweichung pro Verstellzyklus auf einen vorgegebenen prozentualen Anteil der jeweils aktuellen Stellungsabweichung begrenzt oder festgelegt sein, wodurch sich die Stellungsabweichung asymptotisch an Null annähert. Es hat sich in Versuchen gezeigt, dass eine derartige Verringerung der Stellungsabweichung, die e-funktionsähnlich verläuft, sehr angenehm ist für den Fahrer.

Um die Stellungsabweichung in einer für den Fahrer akzeptablen Zeitdauer zu verringern, ist zweckmäßigerweise eine Verstellzeitdauer vorgegeben, nach deren Ablauf die Stellungsabweichung einen betragsmäßigen Wert kleiner oder gleich einem Abweichungsschwellenwert - der in etwa Null betragen kann - erreicht haben muss.

Damit der Fahrer ausreichend Zeit hat die Handhabenstellung während der Relativverstellung nachzuführen ist vorteilhafterweise vorgesehen, dass die Relativverstellung mit einer vorgegebenen oder auf einen Maximalwert begrenzten Verstellgeschwindigkeit an den gelenkten Fahrzeugrädern erfolgt. Das heißt, dass der Gradient des bei der Relativverstellung zurückgelegten Verstellweges begrenzt oder auf einen festen Wert vorgegeben ist. Der Fahrer kann dann in Ruhe die Handhabenstellung korrigieren, so dass wieder der gewünschte Kurs des Fahrzeugs anliegt. Die Verstellgeschwindigkeit an den gelenkten Fahrzeugrädern kann beispielsweise zwischen 0,1 und 1,0 ° pro Sekunde betragen. Entsprechend der aktuell eingestellten Zuordnungsfunktion ergibt sich daraus die Handhabengeschwindigkeit, mit der der Fahrer die Lenkhandhabe nachführen bzw. nachstellen muss, um den Kurs zu halten.

In einer weiteren vorteilhaften Ausführungsform des Verfahrens ist vorgesehen, dass die Relativverstellung bei einer Fahrzeuglängsgeschwindigkeit, die geringer ist als ein vorgebbarer Geschwindigkeitsschwellenwert, nur dann erfolgt, wenn die Richtung einer vom Fahrer mauell ausgeführten Handhabenstellungsänderung mit der Richtung korrespondiert, in die die Relativverstellung an den gelenkten Fahrzeugrädern erfolgen soll. Eine Relativverstellung an den gelenkten Fahrzeugrädern nach rechts wird somit nur dann durchgeführt, wenn der Fahrer die Lenkhandhabe in die einer Radauslenkung nach rechts entsprechende Richtung bewegt, also wenn er beispielsweise das Lenkhandrad nach rechts dreht. Für die Relativverstellung nach links dies entsprechend.

Die Ermittlung der Stellungsabweichung kann derart erfolgen, dass nach dem Aktivieren der Steuervorrichtung (13) die Soll-Handhabenstellung der Lenkhandhabe (8) bestimmt wird, die dem momentanen Lenkwinkel bei der momentan eingestellten Lenkübersetzung entspricht, wobei sich Stellungsabweichung aus der Differenz zwischen der momentanen Handhabenstellung und der Soll-Handhabenstellung ergibt.

Die Relativverstellung kann parameterabhängig erfolgen. Dabei kann insbesondere die Verstellgeschwindigkeit von einem oder mehreren Parametern abhängen, die den aktuellen fahrdynamischen Zustand oder einen sonstigen Fahrzeugzustand beschreiben. Als Parameter kommen z.B. in Betracht: eine an der Lenkhandhabe wirksame Handkraft, die momentane Auslenkung der Lenkhandhabe aus ihrer der Geradeausstellung der gelenkten Fahrzeugräder entsprechenden Normallage, die momentane Auslenkung der gelenkten Fahrzeugräder aus ihrer Geradeausstellung, der Betrag der Stellungsabweichung, eine die Quer- oder Längsdynamik des Fahrzeugs kennzeichnende Größe (z.B. die Fahrzeuglängsgeschwindigkeit) und/oder die Zeit.

Im Übrigen wird hinsichtlich bevorzugter Merkmale der Erfindung auf die Ansprüche sowie die nachfolgende Erläuterung der Zeichnung verwiesen, anhand der besonders bevorzugte Ausführungsformen der Erfindung näher beschrieben werden, wobei Schutz nicht nur für die ausdrücklich beschriebenen Merkmalskombinationen, sondern auch für prinzipiell beliebige Kombinationen der beschriebenen Merkmale beansprucht wird.

Es zeigen:
- Fig. 1: eine Ausführungsform eines Lenksystems bei dem die gelenkten Fahrzeugräder über ein Überlagerungsgetriebe mit einem Lenkhandrad sowie einem selbsthemmenden Elektromotor mechanisch verbunden sind,
- Fig. 2: ein Ausführungsbeispiel eines Lenksystems, welches nach dem Konzept "Steer-by-wire" arbeitet, und
- Fig. 3: ein Diagramm, welches verschiedene Lenkkennlinien darstellt, die jeweils eine Zuordnungsfunktion zwischen der Handhabenstellung des Lenkhandrades und dem Lenkwinkel der gelenkten Fahrzeugräder angeben, wobei des weiteren eventuelle Synchronisierungsmaßnahmen beispielhaft dargestellt sind.

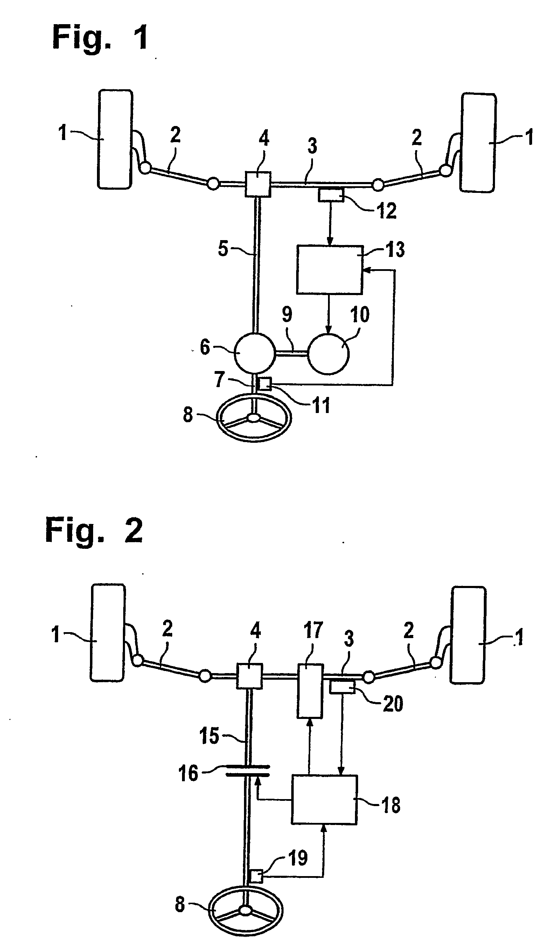

Gemäß Fig. 1 besitzt ein im Übrigen nicht näher dargestelltes Kraftfahrzeug lenkbare Vorderräder 1, die über Spurstangen 2 mit einer Verbindungsstange 3 miteinander zu gemeinsamer Lenkbetätigung verbunden sind.

Die Verbindungsstange 3 ist über ein Getriebe 4 mit einer Lenkwelle 5 mechanisch zwangsgekoppelt, die über ein Überlagerungsgetriebe 6 einerseits mit einer Lenkhandradwelle 7, auf der eine als Lenkhandrad 8 ausgebildete Lenkhandhabe drehfest angeordnet ist, und andererseits über eine Welle 9 mit einem selbsthemmenden Elektromotor 10 antriebsverbunden ist. Die Überlagerung der Drehbewegungen der Lenkhandradwelle 7 und der Welle 9 bestimmt also die Drehbewegung der Lenkwelle 5. Es findet demnach eine Überlagerung der Drehbewegungen der beiden Wellen 7 und 9 statt, wobei sich die Drehbewegung der Lenkwelle 5 aus dieser Überlagerung ergibt.

Die Handhabenstellung LH des Lenkhandrades 8 wird von einem Handhabensensor erfasst. Beim dargestellten Ausführungsbeispiel nach Fig. 1 wirkt die Lenkhandradwelle 7 bzw. das Lenkhandrad 8 mit einem den Handhabensensor bildenden Drehwinkelgeber 11 zusammen, welcher die Drehverstellung von Lenkhandrad 8 bzw. Lenkhandradwelle 7 erfaßt. Alternativ oder zusätzlich könnte als Handhabensensor auch ein Momentensensor verwendet werden.

Ein Lenkwinkelgeber ist vorgesehen zur Erfassung des an den gelenkten Fahrzeugrädern momentan eingestellten Lenkwinkels. Hierfür wirkt die Verbindungsstange 3 mit einem Weggeber 12 zusammen, der die Verschiebung der Verbindungsstange 3 und damit den mittleren Lenkwinkel LW der Vorderräder 1 erfasst. Es versteht sich, dass anstelle oder zusätzlich zum Weggeber 12 beispielsweise auch Winkelsensoren oder andere geeignete Sensoren eingesetzt werden könnten.

Der Drehwinkelgeber 11 und Weggeber 12 sind mit entsprechenden Eingängen einer elektronischen Steuervorrichtung 13 verbunden, die den Elektromotor 10 bzw. eine nicht dargestellte Treiberschaltung dieses Motors 10 ansteuert, der wiederum drehfest mit der Welle 9 verbunden ist und diese entsprechend antreibt. Wie oben ausgeführt überlagert sich die Drehbewegung der Welle 9 mit der Drehbewegung der Lenkhandradwelle 7 zu der Drehbewegung der Lenkwelle 5, die dann über das Getriebe 4, die Verbindungsstange 3 und die Spurstange 2 in eine Lenkwinkeländerung umgesetzt wird.

Im Beispiel der Fig. 2 wird die Verbindungsstange 3 über das Getriebe 4 mit einer Lenkwelle 15 verbunden, die durch eine Kupplung 16 auftrennbar und bewegungskoppelbar ist, so dass das am getriebefernen Ende der Lenkwelle 15 auf dieser Welle 15 drehfest angeordnete Lenkhandrad 8 nur bei geschlossener Kupplung 16 mit der Verbindungsstange 3 und dementsprechend mit den lenkbaren Vorderrädern 1 mechanisch bewegungsgekoppelt und bei offener Kupplung 16 von den lenkbaren Vorderrädern mechanisch bewegungsentkoppelt ist. Die Verbindungsstange 3 ist antriebsmäßig mit einem beispielsweise elektrischen, selbsthemmungsfreien Stellmotor 17 verbunden. Dieser bzw. dessen Treiberschaltung (nicht dargestellt) wird mittels einer elektronischen Regelvorrichtung 18 gesteuert, welche eingangsseitig mit einem dem Lenkhandrad 8 bzw. dem lenkhandradseitigen Teil der Lenkwelle 15 zugeordneten, als Drehwinkelgeber 19 ausgebildeten Handhabensensor sowie einem Wegsensor 20 zur Erfassung der Verschiebung der Verbindungsstange 3 und dementsprechend der mittleren Lenkwinkel LW der Vorderräder zugeordnet ist. Wie im Zusammenhang mit Fig. 1 beschrieben könnte der Handhabensensor auch bei diesem Ausführungsbeispiel alternativ oder zusätzlich einen Momentensensor aufweisen zur Messung des Lenkwinkels LW könnte zusätzlich oder alternativ ein Winkelsensor verwendet werden.

Im Übrigen ist die Regelvorrichtung 18 ausgangsseitig mit der Kupplung 16 bzw. einem nicht dargestellten Stellmotor der Kupplung 16 verbunden, die von der Regelvorrichtung 18 bei normalem Lenkbetrieb offengehalten wird.

Beim normalen Lenkbetrieb führt die Regelvorrichtung 18 einen Soll-Istwert-Vergleich für den Lenkwinkel LW aus. Der Lenkwinkel-Sollwert wird anhand der vom Drehwinkelgeber 19 erfassten Handhabenstellung LH in der Regelvorrichtung 18 bestimmt. Der Lenkwinkel-Istwert wird vom Weggeber 20 gemessen. In Abhängigkeit von der Differenz zwischen Lenkwinkel-Sollwert und Lenkwinkel-Istwert steuert die Regelvorrichtung 18 den Stellmotor 17, so dass im Ergebnis die Lenkverstellung der lenkbaren Vorderräder 1 den Vorgaben des Lenkhandrades 8 folgt.

Die Regelvorrichtung 18 kann bei der Bestimmung des Lenkwinkel-Sollwertes Parameter berücksichtigen, wie vom Fahrer einstellbare Einstellwerte oder beispielsweise den fahrdynamischen Zustand des Fahrzeugs beschreibende Parameter, wie die Fahrzeuglängsgeschwindigkeit. Somit können verschiedene Zuordnungsfunktionen zwischen der Handhabenstellung LH und dem Lenkwinkel LW -die auch als Lenkkennlinien bezeichnet werden können - parameterabhängig eingestellt werden. Es ist dabei auch denkbar, dass der Fahrer aus mehreren vorgegebenen Zuordnungsfunktionen bzw. Lenkkennlinien jeweils eine Zuordnungsfunktion als aktuelle Zuordnungsfunktion auswählen kann.

Bei das Lenksystem im Normalbetrieb beeinträchtigenden Störfällen und bei abgeschalteter elektrischer Energieversorgung der Regelvorrichtung 18 - beispielsweise nach dem Abstellen des Fahrzeugs - schließt die Kupplung 16, so dass die lenkbaren Vorderräder 1 in herkömmlicher Weise mechanisch über die Lenkwelle 15 durch das Lenkhandrad 8 gesteuert werden, wobei sich der selbsthemmungsfreie Stellmotor 17 mitbewegt. Bei geschlossener Kupplung ist dann eine andere Zuordnungsfunktion gegeben, als während des Normalbetriebs des Lenksystems.

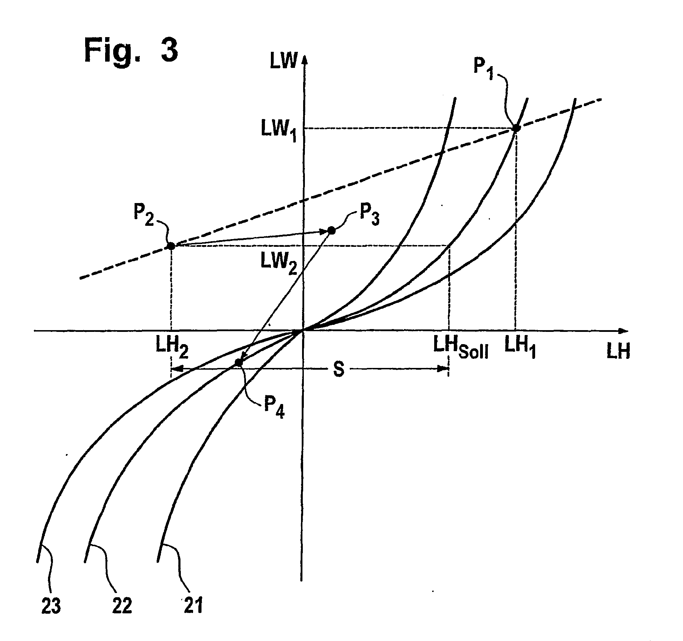

Unter Bezugnahme auf Fig. 3 wird im Folgenden die Synchronisation der Handhabenstellung LH mit der Stellung der gelenkten Fahrzeugräder 1 näher erläutert. Im Diagramm in Fig. 3 ist der Lenkwinkel LW an den gelenkten Fahrzeugrädern über dem Lenkhandradwinkel LH aufgetragen. Es sind beispielhaft Zuordnungsfunktionen bzw. Lenkkennlinien 21 bis 23 dargestellt, die beim Normalbetrieb der anhand der Fig. 1 und 2 beschriebenen Lenkungen einstellbar sind.

Wie die Lenkkennlinien 21 bis 23 beispielhaft zeigen, wird die Geradeausstellung der Vorderräder 1, d.h. LW = 0, immer genau dann eingenommen, wenn das Lenkhandrad 8 seine Mittellage einnimmt, in der LH = 0 gilt.

Es ist möglich auch während der Fahrt von einer Lenkkennlinie auf eine andere Lenkkennlinie zu wechseln bzw. umzuschalten, beispielsweise von der ersten Lenkkennlinie 21 auf die zweite Lenkkennlinie 22. Dabei wird die erste Lenkkennlinie 21 schrittweise zur zweiten Lenkkennlinie 22 hin verschoben, bis die durch die zweite Lenkkennlinie 22 gegebene Zuordnungsfunktion erreicht ist. Beim Umschaltvorgang werden sozusagen mehrere zwischen der ersten und der zweiten Lenkkennlinie liegende Lenkkennlinien sukzessive aktiviert, um den Fahrer langsam an das sich ändernde Lenkverhalten des Fahrzeugs zu gewöhnen.

Es sei nunmehr angenommen, dass die aktuelle Handhabenstellung LH den Wert LH₁ aufweist und daktuell die zweite Lenkkennlinie 22 aktiv ist, so dass sich im Normalbetrieb der Lenkwinkel LW₁ einstellt. Es ergibt sich mithin der erste Punkt P₁ auf der zweiten Lenkkennlinie 22. Weiter sei angenommen, dass das Fahrzeug bei unveränderter Stellung der Lenkung abgestellt wird, so dass die elektrische Energieversorgung abgeschaltet ist und dass in diesem abgestellten Zustand die Lenkhandhabe bewegt wird, so dass sich die Handhabenstellung LH verändert.

Mit dem Stillsetzen des Fahrzeuges bzw. mit dem Ausschalten des Fahrzeugmotors und/oder der Ausschaltung des elektrischen Bordnetzes geht die Lenkung automatisch in eine Sonderbetriebsweise entsprechend einer "Rückfallebene" über. Dies ist bei einer Lenkung der Fig. 1 gleichbedeutend damit, dass der Elektromotor 10 unabhängig vom Drehhub des Lenkhandrades 8 stillstehen bleibt. Im Falle einer Lenkung der Fig. 2 ist die Kupplung 16 geschlossen, so dass das Lenkhandrad 8 mechanisch mit den gelenkten Vorderrädern 1 zwangsgekoppelt ist.

Bei ausgeschalteter elektrischer Energieversorgung gilt jedoch eine von der zweiten Lenkkennlinie 22 verschiedene, durch die mechanische Ausgestaltung der Lenkung vorgegebene Sonderbetriebskennlinie 24, die beispielsgemäß eine Gerade darstellt, aber in Abwandlung hierzu prinzipiell auch andere Verläufe aufweisen kann. Die Sonderbetriebskennlinie 24 ist in Fig. 3 gestrichelt dargestellt.

Durch das Drehen des Lenkhandrades 8 bei ausgeschalteter elektrischer Energieversorgung ausgehend von der durch den ersten Punkt P₁ angegebenen Stellung des Lenkhandrades 8 und der gelenkten Fahrzeugräder 1, ergibt sich eine Zuordnungsfunktion gemäß der Sonderbetriebskennlinie 24, die durch den ersten Punkt P₁ verläuft. Dadurch ist die Synchronisierung zwischen Handhabenstellung LH und Lenkwinkel LW aufgehoben, denn die Sonderbetriebskennlinie verläuft nicht durch den Koordinatenursprung 0. Bei einem Lenkwinkel LW von Null ist der Lenkradwinkel ungleich Null und umgekehrt. Dementsprechend ist beim Betrieb in der Rückfallebene keine Synchronisierung zwischen Lenkhandrad 8 und gelenkten Vorderrädern 1 gegeben, d.h. die gelenkten Vorderräder 1 nehmen ihre Geradeausstellung bei nicht bei in Mittellage befindlichem Lenkhandrad 8 ein bzw. haben eine von der Geradeausstellung abweichende Stellung, wenn das Lenkhandrad 8 in seiner Mittellage steht.

Bei ausgeschalteter Energieversorgung, bevor die Lenkung wieder in ihren Normalbetrieb übergeht kann, sei nunmehr der zweite Punkt P₂ auf der Sonderbetriebskennlinie 24 erreicht worden. Wird die elektrische Energieversorgung beispielsweise durch Starten des Fahrzeugs wieder eingeschaltet, so wird die zuletzt eingestellte, der zweiten Lenkkennlinie 22 entsprechende Zuordnungsfunktion aktiviert bzw. eingestellt. Der zweite Punkt P₂ liegt allerdings nicht auf der Lenkkennlinie 22, so dass eine Relativverstellung zwischen Lenkhandrad 8 und gelenkten Fahrzeugrädern 1 zur Synchronisierung erfolgen muss.

Nach dem Aktivieren der Steuer- oder Regelvorrichtung durch das Einschalten der elektrischen Energieversorgung wird die Stellungsabweichung S bestimmt. Zunächst wird eine Soll-Handhabenstellung LHₛₒₗₗ der Lenkhandhabe ermittelt, die dem momentanen Lenkwinkel LW₂ bei der momentan eingestellten Zuordnungsfunktion gemäß der Lenkkennlinie 22 entspricht, wobei sich die Stellungsabweichung S aus der Differenz zwischen der momentanen Handhabenstellung LH₂ und der Soll-Handhabenstellung LH_{Soll} ergibt. Das Vorzeichen der Stellungsabweichung S gibt an, in welche Richtung die gelenkten Fahrzeugräder 1 während der Relativverstellung zu bewegen sind.

Beispielsgemäß ist hier nun vorgesehen, die notwendige Relativverstellungen zur Synchronisation nur dann auszuführen, wenn ein Abfragekriterium erfüllt ist.

Als Abfragekriterium dient bei der vorliegenden Ausführungsform des Verfahrens zunächst die Fahrzeuglängsgeschwindigkeit. Ist die Fahrzeuglängsgeschwindigkeit betragsmäßig größer als ein vorgegebene Geschwindigkeitsschwellenwert - der beispielsweise zwischen 0,5 und 5 km/h betragen kann - dann erfolgt die Relativverstellung zyklisch. In jedem Verstellzyklus wird ein Verstellschritt ausgeführt, so dass sich die Stellungsabweichung S nach jedem Verstellschritt verringert.

Die betragsmäßige Größe des in jedem Verstellzyklus ausgeführten Verstellschritts ergibt sich aus einem fest vorgegebenen prozentualen Anteil des Betrages der in diesem Verstellzyklus aktuell vorliegenden Stellungsabweichung S. Der Betrag der Verstellschritte nimmt demnach bei jedem Verstellzyklus ab. Allerdings ist Synchronisationsgeschwindigkeit, das heißt der Gradient der Relativverstellung, auf einen Maximalwert begrenzt, um zu schnell ablaufende Relativverstellbewegungen zu vermeiden, die der Fahrer nicht problemlos durch eine Korrektur der Handhabenstellung LH ausgleichen kann. Die Relativverstellung erfolgt damit sehr langsam, beispielsweise mit Synchronisationsgeschwindigkeiten zwischen 0,1 und 1,0 ° pro Sekunde an den gelenkten Fahrzeugrädern.

Es ist bei einer abgewandelten Ausführungsvariante auch möglich, eine Verstellzeitdauer vorzugeben, nach deren Ablauf die Stellungsabweichung S einen betragsmäßigen Wert kleiner oder gleich einem vorgegebenen Abweichungsschwellenwert sein muss, um zu lange vorhandene Stellungsabweichungen zu vermeiden. Der Abweichungsschwellenwert kann beispielsweise in etwa Null betragen.

Bei einer Fahrzeuglängsgeschwindigkeit, die geringer ist als der vorgegebene Geschwindigkeitsschwellenwert erfolgt die Relativverstellung nur während die Lenkhandhabe 8 vom Fahrer manuell bewegt wird. Weiterhin wird nur eine Relativverstellung vorgenommen, wenn die Richtung der Handhabenstellungsänderung mit der Richtung korrespondiert, in die die Relativverstellung erfolgen soll. Das bedeutet, dass eine Relativverstellung an den gelenkten Fahrzeugrädern 1 nach rechts nur bei einer Lenkraddrehung nach rechts erfolgt. Für eine Relativverstellung nach links gilt dies entsprechend.

Dieser Fall einer unterhalb des Geschwindigkeitsschwellenwertes liegenden Fahrzeuglängsgeschwindigkeit ist in Fig. 3 angenommen.

Ausgehend vom zweiten Punkt P₂ erhöht sich der Lenkwinkel LW bei einer Drehung des Lenkhandrades 8 in Richtung größerer Handhabenstellungswerte LH viel geringer als er es gemäß der aktuell eingestellten Zuordnungsfunktion nach der zweiten Lenkkennlinie 22 eigentlich sollte (Pfeil 25 in Fig. 3). Eine geringfügige Vergrößerung des Lenkwinkels LW wird durchgeführt, um dem Fahrer eine funktionsfähige, seiner Lenkhandradbewegung folgende Lenkwinkeländerung zu vermitteln.

Im dritten Punkt P₃ kehrt der Fahrer die Drehrichtung des Lenkhandrades 8 um, so dass ausgehend von dieser Lage die Zuordnung zwischen Handhabenstellung LH und Lenkwinkel LW gemäß Pfeil 27 gegeben ist. Dabei wird der Lenkwinkel LW durch die überlagerte Relativverstellung stärker verringert, als dies durch die Handhabenstellungsänderung und die zweite Lenkkennlinie 22 vorgegeben ist.

Schließlich trifft der Pfeil 27 im vierten Punkt P₄ auf die zweite Lenkkennlinie 22. Ab diesem Zeitpunkt ist die Stellungsabweichung S auf Null reduziert und die Zuordnungsfunktion zwischen Lenkwinkel LW und der Handhabenstellung LH entspricht wieder dem Verlauf der zweiten Lenkkennlinie 22.

Die Steigung der Pfeile 25 und 27 kann parameterabhängig veränderbar sein, vorausgesetzt, dass die Steuervorrichtung 13 der Lenkung gemäß Fig. 1 bzw. die Regelvorrichtung 18 der Lenkung nach Fig. 2 von einer entsprechenden Sensorik Daten zu den jeweiligen Parametern erhalten. Beispielsgemäß wird die Abweichung, mit der der Lenkwinkel LW durch die Überlagerte Relativverstellung wieder mit der Handhabenstellung LH synchronisiert wird in Abhängigkeit von der Fahrzeuglängsgeschwindigkeit berechnet. Alternativ können auch andere die Fahrzeuglängs- oder Fahrzeugquerdynamik beschreibende Größen berücksichtigt werden, wie die Längs- oder die Querbeschleunigung. Auch die aktuelle Handhabenstellung LH, der aktuelle Lenkwinkel LW oder andere den Fahrzeugzustand beschreibende Parameter können berücksichtigt werden.

## Patentansprüche

1. Verfahren zur Synchronisation der Handhabenstellung (LH) der Lenkhandhabe (8) und dem an den gelenkten Fahrzeugrädern (1) eingestellten Lenkwinkel (LW) für eine Lenkung mit anhand einer Steuer- oder Regelvorrichtung (13; 18) einstellbarer Zuordnungsfunktion zwischen der Handhabenstellung (LH) und dem Lenkwinkel (LW), wobei nach der auf einen Nichtbetrieb der Steuer- oder Regelvorrichtung (13; 18) folgenden Aktivierung der Steuer- oder Regelvorrichtung (13; 18) die momentane Handhabenstellung (LH) und der momentane Lenkwinkel (LW) unter Berücksichtigung der momentan eingestellten Zuordnungsfunktion verglichen wird und im Falle einer Stellungsabweichung (S) eine Relativverstellung zur Verringerung der Stellungsabweichung (S) zwischen der Handhabenstellung (LH) und dem Lenkwinkel (LW) erfolgt,
**dadurch gekennzeichnet,**
**dass** die Relativverstellung nur erfolgt, wenn nach oder beim Aktivieren der Steuer- oder Regelvorrichtung (13; 18) zusätzlich zur Stellungsabweichung (S) ein Abfragekriterium erfüllt ist.

2. Verfahren nach Anspruch 1,
**dadurch gekennzeichnet,**
**dass** die Relativverstellung insbesondere bei einer Fahrzeuglängsgeschwindigkeit, die geringer ist als ein vorgebbarer Geschwindigkeitsschwellenwert, nur erfolgt, während die Lenkhandhabe (8) vom Fahrer manuell bewegt wird.

3. Verfahren nach Anspruch 1 oder 2,
**dadurch gekennzeichnet,**
**dass** die Relativverstellung insbesondere bei einer Fahrzeuglängsgeschwindigkeit, die größer ist als ein vorgebbarer Geschwindigkeitsschwellenwert, schrittweise zyklisch erfolgt und pro Verstellzyklus ein Verstellschritt durchgeführt wird, bis die Stellungsabweichung (S) in etwa Null beträgt.

4. Verfahren nach Anspruch 3,
**dadurch gekennzeichnet,**
**dass** die Verringerung der Stellungsabweichung (S) pro Verstellzyklus auf einen vorgegebenen prozentualen Anteil der jeweils aktuellen Stellungsabweichung (S) begrenzt oder festgelegt ist.

5. Verfahren nach einem der Ansprüche 1 bis 4,
**dadurch gekennzeichnet,**
**dass** eine Verstellzeitdauer vorgegeben ist, nach deren Ablauf die Stellungsabweichung (S) einen betragsmäßigen Wert kleiner oder gleich einem vorgegebenen Abweichungsschwellenwert erreicht haben muss.

6. Verfahren nach einem der Ansprüche 1 bis 5,
**dadurch gekennzeichnet,**
**dass** die Relativverstellung mit einer vorgegebenen oder auf einen Maximalwert begrenzten Synchronisationsgeschwindigkeit an den gelenkten Fahrzeugrädern (1) erfolgt.

7. Verfahren nach einem der Ansprüche 1 bis 6,
**dadurch gekennzeichnet,**
**dass** die Relativverstellung bei einer Fahrzeuglängsgeschwindigkeit, die geringer ist als ein vorgebbarer Geschwindigkeitsschwellenwert, nur dann erfolgt, wenn die Richtung der Handhabenstellungsänderung mit der Richtung korrespondiert, in die die Relativverstellung erfolgen soll.

8. Verfahren nach einem der Ansprüche 1 bis 7,
**dadurch gekennzeichnet,**
**dass** nach dem Aktivieren der Steuervorrichtung (13) die Soll-Handhabenstellung (LHₛₒₗₗ) der Lenkhandhabe (8) bestimmt wird, die dem momentanen Lenkwinkel (LW) bei der momentan eingestellten Lenkübersetzung entspricht, wobei sich die Stellungsabweichung (S) aus der Differenz zwischen der momentanen Handhabenstellung (LH_{Ist}) und der Soll-Handhabenstellung (LHₛₒₗₗ) ergibt.

9. Verfahren nach einem der Ansprüche 1 bis 8,
**dadurch gekennzeichnet,**
**dass** die Relativverstellung parameterabhängig erfolgt.

10. Verfahren nach Anspruch 9,
**dadurch gekennzeichnet,**
**dass** die Relativverstellung in Abhängigkeit von einer an der Lenkhandhabe (8) wirksamen Handkraft und/oder von der momentanen Auslenkung der Lenkhandhabe (8) aus ihrer der Geradeausstellung der gelenkten Fahrzeugräder (1) entsprechenden Normallage und/oder von der augenblicklichen Auslenkung der gelenkten Fahrzeugräder (1) aus ihrer Geradeausstellung und/oder vom Betrag der Stellungsabweichung (S) und/oder von einer die Quer- oder Längsdynamik des Fahrzeugs kennzeichnenden Größe und/oder von der Fahrzeuglängsgeschwindigkeit und/oder von der Zeit erfolgt.

11. Vorrichtung zur Durchführung des Verfahrens nach einem der Ansprüche 1 bis 10, mit Mitteln (11; 19) zur Bestimmung der Handhabenstellung (LH) einer Lenkhandhabe (8) eines Fahrzeugs, mit Mitteln (12; 20) zur Bestimmung des Lenkwinkels (LW) der gelenkten Fahrzeugräder (1) und mit einer Steuer- oder Regelvorrichtung (13; 18) zum Einstellen des Lenkwinkels (LW) in Abhängigkeit von der Handhabenstellung (LH) der Lenkhandhabe (8) und einer einstellbaren Zuordnungsfunktion zwischen Handhabenstellung (LH) und Lenkwinkel (LW), wobei die Steuer- oder Regelvorrichtung (13; 18) nach ihrer auf einen Nichtbetrieb folgenden Aktivierung die momentane Handhabenstellung (LH) und den momentanen Lenkwinkel (LW) unter Berücksichtigung der momentan eingestellten Zuordnungsfunktion zwischen Handhabenstellung (LH) und Lenkwinkel (LW) vergleicht und im Falle einer Stellungsabweichung (S) eine Relativverstellung zur Verringerung der Stellungsabweichung (S) zwischen der Handhabenstellung (LH) und dem Lenkwinkel (LW) durchführt,
**dadurch gekennzeichnet,**
**dass** die Relativverstellung nur erfolgt, wenn nach oder beim Aktivieren der Steuer- oder Regelvorrichtung (13; 18) zusätzlich zur Stellungsabweichung (S) ein Abfragekriterium erfüllt ist.

## Claims

1. Method for synchronizing the position (LH) of the steering handle and the steering angle (LW) which has been set at the steered vehicle wheels (1) for steering with a relationship function which can be set between the handle position (LH) and the steering angle (LW) by means of an open-loop or closed-loop control device (13; 18), wherein after the activation of the open-loop or closed-loop control device (13; 18) which follows nonoperation of the open-loop or closed-loop control device (13; 18) the instantaneous handle position (LH) and the instantaneous steering angle (LW) are compared taking into account the instantaneously set relationship function, and in the case of a deviation (S) in position a relative adjustment is carried out in order to reduce the deviation (S) in position between the handle position (LH) and the steering angle (LW), **characterized in that** the relative adjustment takes place only if after or during the activation of the open-loop or closed-loop control device (13; 18), an interrogation criterion is fulfilled in addition to the deviation (S) in position.

2. Method according to Claim 1, **characterized in that**, in particular in the case of a vehicle longitudinal velocity which is lower than a predefinable velocity threshold value, the relative adjustment takes place only while the steering handle (8) is being moved manually by the driver.

3. Method according to one of Claims 1 or 2, **characterized in that** the relative adjustment takes place in an incremental cyclical fashion, in particular in the case of a vehicle longitudinal velocity which is higher than a predefinable velocity threshold value, and one adjustment step is carried out per adjustment cycle until the deviation (S) in position is approximately zero.

4. Method according to Claim 3, **characterized in that** the reduction in the deviation (S) in position per adjustment cycle is limited to, or defined as, a predefined percentage of the respective current deviation (S) in position.

5. Method according to one of Claims 1 to 4, **characterized by** the definition of an adjustment time period after whose expiry the deviation (S) in position has to have reached a value which in absolute terms is less than or equal to a predefined deviation threshold value.

6. Method according to one of Claims 1 to 5, **characterized in that** the relative adjustment takes place with a synchronization speed at the steered vehicle wheels (1) which is predefined or limited to a maximum value.

7. Method according to one of Claims 1 to 6, **characterized in that** in the case of a vehicle longitudinal velocity which is less than a predefinable velocity threshold value, the relative adjustment takes place only if the direction of the change in the handle position corresponds to the direction in which the relative adjustment is to take place.

8. Method according to one of Claims 1 to 7 **characterized in that** after the control device (13) has been activated the setpoint position (LHₛₒₗₗ) of the steering wheel (8) which corresponds to the instantaneous steering angle (LW) for the instantaneously set steering transmission ratio is determined, wherein the deviation (S) in position results from the difference between the instantaneous handle position (LHᵢₛₜ) and the setpoint handle position (LHₛₒₗₗ) .

9. Method according to one of Claims 1 to 8, **characterized in that** the relative adjustment takes place as a function of parameters.

10. Method according to Claim 9, **characterized in that** the relative adjustment takes place as a function of a manual force which is effective at the steering wheel (8) and/or of the instantaneous deflection of the steering wheel (8) out of its normal position corresponding to the straight-ahead position of the steered vehicle wheels (1) and/or of the instantaneous deflection of the steered vehicle wheels (1) out of their straight-ahead position and/or of the absolute value of the deviation (S) in position and/or of a variable which characterizes the lateral dynamics or longitudinal dynamics of the vehicle and/or of the longitudinal velocity of the vehicle and/or of time.

11. Device for carrying out the method according to one of Claims 1 to 10, having means (11; 19) for determining the position (LH) of a steering wheel (8) of a vehicle, having means (12; 20) for determining the steering angle (LW) of the steered vehicle wheels (1) and having an open-loop or closed-loop control device (13; 18) for setting the steering angle (LW) as a function of the position (LH) of the steering wheel (8) and a relationship function which can be set between the handle position (LH) and the steering angle (LW), wherein after the open-loop or closed-loop control device (13; 18) has been activated following nonoperation it compares the instantaneous handle position (LH) and the instantaneous steering angle (LW) taking into account the instantaneously set relationship function between the handle position (LH) and steering angle (LW), and in the case of a deviation (S) in position it carries out a relative adjustment in order to reduce the deviation (S) in position between the handle position (LH) and the steering angle (LW), **characterized in that** the relative adjustment takes place only if, after or during the activation of the open-loop or closed-loop control device (13; 18), an interrogation criterion is fulfilled in addition to the deviation (S) in position.

## Revendications

1. Procédé pour synchroniser la position de braquage (LH) du volant de direction (8) et l'angle de braquage (LW) appliqué aux roues directrices (1) du véhicule pour un braquage à l'aide d'un dispositif de commande ou de régulation (13 ; 18) avec une fonction réglable d'affectation entre la position de braquage (LH) et l'angle de braquage (LW) dans lequel, après l'activation du dispositif de commande ou de régulation (13 ; 18) suivant un repos du dispositif de commande ou de régulation (13 ; 18), la position de braquage (LH) momentanée et l'angle de braquage (LW) momentané sont comparés en respectant le réglage momentané de la fonction d'affectation et dans le cas d'un écart de position (S), il s'effectue une correction relative pour réduire l'écart de position (S) entre la position de braquage (LH) et l'angle de braquage (LW), **caractérisé en ce que** la correction relative ne s'effectue que lorsqu'en plus de l'écart de position (S) après ou pendant l'activation du dispositif de commande ou de régulation (13 ; 18), un critère de scrutation est satisfait.

2. Procédé selon la revendication 1, **caractérisé en ce que**, notamment avec une vitesse longitudinale du véhicule qui est inférieure à une valeur de seuil définie de la vitesse, la correction relative ne s'effectue que pendant que le volant de direction (8) est actionné manuellement par le conducteur.

3. Procédé selon la revendication 1 ou 2, **caractérisé en ce que**, notamment avec une vitesse longitudinale du véhicule qui est supérieure à une valeur de seuil définie de la vitesse, la correction relative s'effectue pas à pas de manière cyclique et un pas de correction s'exécute par cycle de correction, jusqu'à ce que l'écart de position (S) soit à peu près nul.

4. Procédé selon la revendication 3, **caractérisé en ce que** la réduction de l'écart de position (S) par cycle de correction est limitée ou fixée à une partie définie en pourcent de l'écart de position (S) courant respectif.

5. Procédé selon une des revendications 1 à 4, **caractérisé en ce qu'**une durée de correction est définie après l'écoulement de laquelle il faut que l'écart de position (S) ait atteint une valeur proportionnelle inférieure ou égale à une valeur de seuil définie d'écart.

6. Procédé selon une des revendications 1 à 5, **caractérisé en ce que** la correction relative s'effectue sur les roues directrices du véhicule (1) à une vitesse de synchronisation définie ou limitée à une valeur maximale.

7. Procédé selon une des revendications 1 à 6, **caractérisé en ce qu'**avec une vitesse longitudinale du véhicule qui est inférieure à une valeur de seuil définie de la vitesse, la correction relative ne s'effectue que lorsque le sens de la modification de la position de braquage correspond au sens dans lequel la correction relative doit s'effectuer.

8. Procédé selon une des revendications 1 à 7, **caractérisé en ce qu'**après l'activation du dispositif de commande (13), on définit la position de consigne de braquage (LHₛₒₗₗ) du volant de direction (8), qui correspond à l'angle de braquage (LW) momentané pour le rapport de braquage réglé momentanément, dans lequel l'écart de position (S) résulte de la différence entre la position de braquage (LH_{Ist}) momentanée et la position de consigne de braquage (LHₛₒₗₗ).

9. Procédé selon une des revendications 1 à 8, **caractérisé en ce que** la correction relative s'effectue en fonction de paramètres.

10. Procédé selon la revendication 9, **caractérisé en ce que** la correction relative s'effectue en fonction d'une force manuelle qui s'exerce sur le volant de direction (8) et/ou du braquage momentané du volant de direction (8) à partir de sa position normale qui correspond à la position en ligne droite des roues directrices (1) du véhicule et/ou du braquage actuel des roues directrices (1) du véhicule à partir de leur position en ligne droite et/ou de l'importance de l'écart de position (S) et/ou d'une grandeur qui caractérise la dynamique transversale ou longitudinale du véhicule et/ou de la vitesse longitudinale du véhicule et/ou du temps.

11. Dispositif pour exécuter le procédé selon une des revendications 1 à 10, avec les moyens (11 ; 19) pour la détermination de la position de braquage (LH) d'un volant de direction (8) d'un véhicule, avec les moyens (12 ; 20) pour la détermination de l'angle de braquage (LW) des roues directrices (1) du véhicule et avec un dispositif de commande ou de régulation (13 ; 18) pour le réglage de l'angle de braquage (LW) en fonction de la position de braquage (LH) du volant de direction (8) et une fonction réglable d'affectation entre la position de braquage (LH) et l'angle de braquage (LW) dans laquelle le dispositif de commande ou de régulation (13 ; 18), après son activation suivant un repos, compare la position de braquage (LH) momentanée et l'angle de braquage (LW) momentané en respectant le réglage momentané de la fonction d'affectation entre la position de braquage (LH) et l'angle de braquage (LW) et dans le cas d'un écart de position (S), exécute une correction relative pour réduire l'écart de position (S) entre la position de braquage (LH) et l'angle de braquage (LW), **caractérisé en ce que** la correction relative ne s'effectue que lorsqu'en plus de l'écart de position (S) après ou pendant l'activation du dispositif de commande ou de régulation (13 ; 18), un critère de scrutation est satisfait.
